# EUROPEAN PATENT SPECIFICATION

(11) **EP 1 612 019 B1**
(45) Date of publication and mention of the grant of the patent: **15.08.2007**
(21) Application number: 05380138.7
(22) Date of filing: 29.06.2005
(51) Int. Cl.: B29B 7/76

(54) **Mixing-dispensing head**
Misch- und Ausgabekopf
Tête de mélange et distribution

(30) Priority: 29.06.2004 ES 200401575
(43) Date of publication of application: 04.01.2006
(73) Proprietor: Plasfi, S.A., 43420 Santa Coloma de Queralt Tarragona (ES)
(72) Inventor: Figueras Farre, Santiago, 43420 Santa Coloma de Queralt Tarragona (ES); Fernandez Munoz, Domènec, 43420 Santa Coloma de Queralt Tarragona (ES); Chico Roca, Agusti, 43420 Santa Coloma de Queralt Tarragona (ES); Sancho Descalzo, Andreu, 43420 Santa Coloma de Queralt Tarragona (ES); Vinas Garcia, Antoni, 43420 Santa Coloma de Queralt Tarragona (ES); Domenec Mestres, Carles, 43420 Santa Coloma de Queralt Tarragona (ES); Riba Romeva, Carles, 43420 Santa Coloma de Queralt Tarragona (ES); Rull Duran, Joan, 43420 Santa Coloma de Queralt Tarragona (ES)
(74) Representative: Gislon, Gabriele

(56) References cited:
- WO-A-99/06196
- US-A- 5 445 781

## Description

### Field of the technique

In, general, this invention concerns a mixing-dispensing head for mixing two or more components and dispense the resulting mixture and, more specifically, a mixing-dispensing head for mixing polyol and isocyanate in liquid form in order to produce a polyurethane (PUR) foam, including the means to clean a mixing chamber and associated passages after each mixing operation.

The head of this invention is useful in the packaging and commerce sectors, applicable to an automatic appliance for the injection of PUR in plastic bags for the production of protective cushions.

### State of the previous art

Within the state of the art, automatic devices are known that dispense polyurethane foam, consisting of two liquid components that are pumped through corresponding hoses to a head where they are mixed. This head also serves to dispense the mixture, which is introduced into an automatically supplied plastic bag. Once the bag is full, it is placed into the packaging, followed by the product to be packaged and, finally, another bag containing foam is placed on top of the product so that the latter is protected. In situations where the product to be packed is always the same, a variant of this packaging system may be employed, which consists of a manufacturing line of PUR protection in bags using moulds, which then makes it possible to form the bags containing PUR into the desired shape using the corresponding mould.

Patent US-A-4440320 describes a polyurethane foam dispenser device comprising a static mixing chamber and a pair of rotating valves, each one for a different component. The valves are operated to simultaneously alternate between one working position, in which each valve communicates a respective components inlet with the mixing chamber and an extended position in which each valve communicates a solvent inlet with the mixing chamber, Each valve has a rotating cylindrical body with an interior passage that includes a portion of axial passage that permanently communicates with the mixing chamber, and a portion of radial passage which, when said body rotates, it alternatively communicates with the cited respective component and solvent inlets. The portions of axial passage exit at diametrally opposite points within the mixing chamber so that the respective component flows frontally meet together in order to produce the mixture.

The application for international patent WO 99/06196 describes a dispensing system that consists of a mixing-dispensing head for the injection of PUR into plastic bags. The head includes a casing that defines an interior cavity that houses a valve body that forms an interior mixing chamber with an open dispensing end. The valves body acts as a launcher and is operated to alternate between a dispensing mode, which allows the components to enter the mixing chamber and a non-dispensing mode. A cleaning system is planned, which includes the provision of a solvent flow to the mixing chamber through the components inlet passages when the head is in the non-dispensing mode and through a channel between the valve body and casing. A spindle is housed inside the valve body mixing chamber that is mounted to move in an axial direction. An annular chamber is defined between an exterior surface of said spindle and an interior surface of the mixing chamber, which allows fluid to pass. The spindle is operated in coordination with the valve body movements between an interference position with the mixing chamber and apposition of no non-interference.

Patent US-A-5586724 makes known a device that produces foam from two components and then to spray it through a nozzle using pressurised gas. The device comprises a body with inlet ports for the components and gas inlet ports that communicate with a conical interior cavity. This body contains a valve element with an exterior conical wall that is complementary to the interior cavity of the body and this valve element houses a part that forms a mixing chamber with a longitudinal through-hole communication with radial through-holes that open into a recessed annual area facing passages of the valve element that open into said exterior conical wall. Rotation of the valve element in relation to the body will close off the flow of components and connect the flow of gas in order to perform a purge operation.

### Description of the invention

The mixing-dispensing head according to claim 1 is of the type that comprises a casing that defines an interior cavity with an open end and components inlet ports, at least one solvent inlet port, with said components inlet ports and the solvent inlet and outlet communicating with said interior cavity. The interior cavity of said casing contains a valve body that defines some exterior surfaces and an interior mixing chamber, with a dispensing aperture, passages for component entry and at least one solvent inlet passage, where said component and solvent inlet passages extend between openings in said exterior surfaces and said mixing chamber. A spindle is housed within the valve body mixing chamber, and between an exterior surface of said spindle and an interior mixing chamber surface, an annular chamber is defined that allows the passage of fluid. Some first driving means are connected to alternatively move said valve body between a mixing and dispensing position, in which said components inlet passages communicate with said components inlet ports, and a blocking position, in which at least one of the exterior valve body surfaces shuts off the components inlet ports. Some second driving means are connected in order to linearly and alternatively translate the spindle along a longitudinal extended position, in which one end of the spindle limits said mixing chamber dispensing aperture and said passages for solvent entry and exit communicate with said annular chamber, and a retracted position, in which the spindle does not interfere with the movement of components from the mixing chamber components inlet passages and said spindle end forms a bottom to the mixing chamber that facilitates the exit of the mixture to the dispensing aperture.

The head of this invention is characterised in that the valve body is mounted in a rotating fashion inside the interior cavity of the casing to be alternatively moved between said mixing and dispensing position and said blocked position by rotating around a longitudinal head axis, with some kinematic linkage means between the valve body and the spindle in order to determine that the valve body mixing and dispensing position corresponds to the retracted spindle body and that the valve body blocked position corresponds to the extended spindle position.

The components inlet passages lead into the mixing chamber in an oblique direction against the exit direction towards the dispensing aperture, thus favouring the flow of components into the mixing chamber in a turbulent manner, which assists in the mixing of the components. Moreover, when the spindle is in the retracted position, its end forms a bottom to the mixing chamber located in an area close to where the components inlet passages lead into the mixing chamber. Thus, the oblique components inlet flows interfere with the spindle end and rebound towards the dispensing aperture, favouring said turbulent flow and hence, a uniform mixture.

In general, given that the valve body is fitted with a rotating movement, both the exterior valve body surfaces as well as the interior surfaces of the interior casing cavity are shaped as revolving surfaces with respect to the mentioned longitudinal head axis, and one of the exterior valve body surfaces onto which the components inlet passages open is a substantially flat surface, perpendicular to the longitudinal axis and facing a substantially flat surface of the interior casing cavity onto which the components inlet ports open. Therefore, when the valve body is in its mixing and dispensing position, the components inlet passage apertures coincide with the components inlet port exits associated with the casing and the components have access to the interior of the mixing chamber. When the valve body, driven by the first driving means, rotates to its blocking position, the components inlet passage apertures move and the substantially flat surface of the valve body closes off the components inlet ports in the casing.

The mentioned kinematic means of linkage between the valve body and the spindle preferably include a helicoidal cam. According to an embodiment, the first driving means are coupled in order to rotate the valve body and said kinematic linkage means act as the second driving means in order to transmit the rotating valve body movement and convert it into spindle translation movement. Preferably, the first driving means comprise an electric geared motor coupled to rotate a cylindrical sleeve by a transmission, which is installed on said casing is a guided fashion to rotate with respect to the longitudinal axis. This cylindrical sleeve is secured to the valve body, with two identical, diametrally opposite, helicoidal cams fitted to its body, which are coupled to a corresponding pair of cam followers fitted to the spindle.

The head also incorporates some means to prevent spindle rotation at the same time as allowing spindle movement produced by the action of the helicoidal cam on said cam follower when the geared motor rotates the cylindrical sleeve. In one embodiment, these means consist of a pair of identical linear guides, which are diametrally opposite, consisting of a stationary part fixed to the casing and pair of corresponding cam followers, connected to the spindle and coupled to said linear guides.

Another head embodiment incorporates a reverse drive system with identical results. This means that the driving means are coupled so that the linearly move the spindle and said kinematic linkage means act as the first driving means to transmit the spindle translation movement to the valve body, converting it into rotational movement of the same. Also here, the kinematic linkage means include one or more helicoidal cams.

According to this invention, the head is designed to form part of a mixing and injection unit that is prepared to operate in cooperation with a bag handling unit to perform automatic filling of said bags with a mixture of the two components. Each components inlet port on the casing is coupled to an associated heater to heat the corresponding component just before it enters the respective components inlet passages and the valve body mixing chamber. Each of said heater are connected to a corresponding supply source for one of the components via some means of producing the flow of said component. In a typical application, one of the heaters is connected to a source of liquid polyol, while the other heater is connected to a liquid isocyanate source, forming polyurethane (PUR) foam from the mixture of said polyol and said isocyanate in the mixing chamber. The bags, for example, are manufactured from high-density polythene (PE-HD) or any other suitable material.

The incorporation of the mentioned heaters in positions adjacent to the head body avoids the need to incorporate the classic sleeve heaters, which require considerable length in order to raise the component temperatures to that required. In addition to this, the layout of the heaters next to the components inlet ports provides enhanced temperature stability and energy efficiency, and also means that the head location is independent of the components supply sources locations, for example drums, since these can be connected to their respective heaters by means of conventional flexible hoses, with the components being driven by pumps.

This construction allows for a compact design of the mentioned mixing and injection unit which, together with the bag handling unit, can easily be made portable and be installed, for example, on a table or shop counter. In addition, these modular mixing and injection units and those for bag handling are designed to operate together with a bag production unit.

### A brief description of the drawings

The characteristics and advantages of this invention will be more fully understood from the following detailed description of embodiments, with reference to the attached drawings, in which:
Fig 1A is a cross-sectional view taken through a central longitudinal first plane of the mixing-dispensing head according to an embodiment of this invention in a service position.
Fig 1B is a cross-sectional view taken through a central longitudinal second plane of the mixing-dispensing head, perpendicular to the first, of the mixing-dispensing head in the same service position shown in Fig 1A;
Fig 2A is a cross-sectional view taken through the central longitudinal first plane of the mixing-dispensing head in a cleaning position.
Fig 2B is a cross-sectional view taken through the central longitudinal second plane of the mixing-dispensing head, perpendicular to the first, of the mixing-dispensing head in the same cleaning position shown in Fig 2A;
Fig 3 is a cross-sectional view taken through plane III-III of Fig 2A;
Fig 4 is a detailed enlarged, sectional view that shows the valve body and spindle construction forming the annular ring.
Fig 5 is a schematic elevation view that shows the head according to this invention incorporated into a mixer and dispensing unit that operates in cooperation with a bag handling unit.
Fig 6 is a cross-sectional view taken through a central longitudinal first plane of the mixing-dispensing head according to another embodiment of this invention in a service position.

### Detailed descriptions of some embodiments

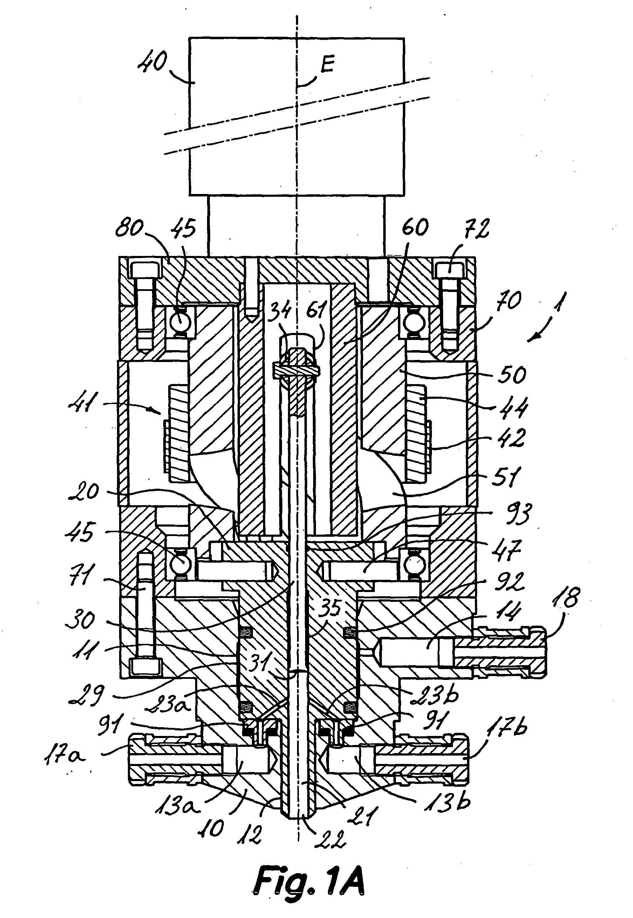

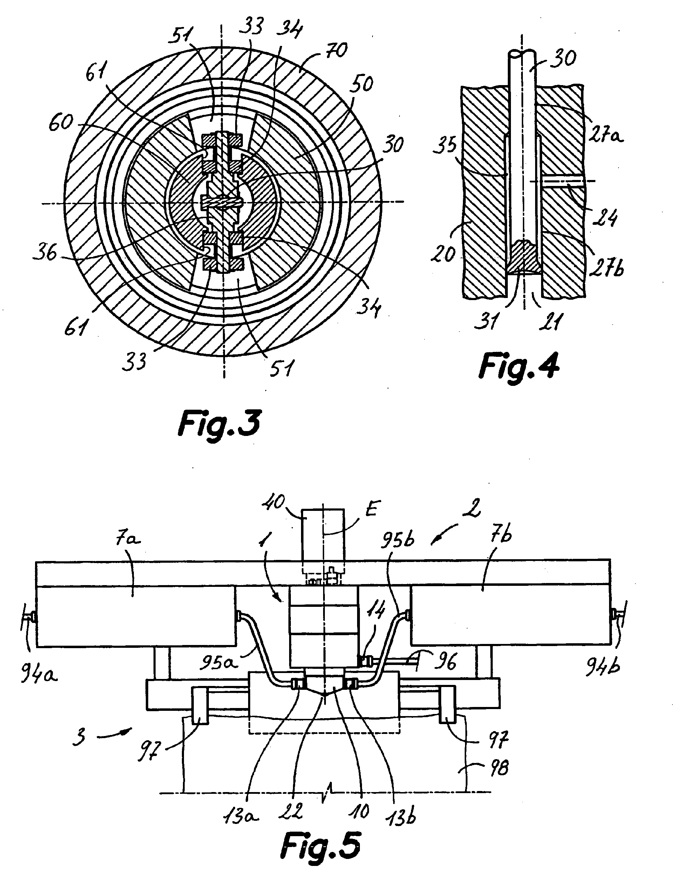

In general, Figs. 1A to 3 with reference number 1 show a mixing-dispensing head according to an embodiment of this invention. Head 1 comprises a casing 10 that defines an interior cavity 11 with an open end 12. A pair of components inlet ports 13a, 13b that are open to the exterior communicate with the mentioned interior cavity 11. The exterior mouths of said components inlet ports 13a, 13b are designed to receive respective connectors 17a, 17b for the connection of respective conduits 95a, 95b (shown in Fig 5) coming from respective components supply sources (for example, via heaters 7a, 7b shown in Fig 5).Similarly, a solvent inlet port 14 communicates the exterior of the casing 10 with the interior cavity 11 and a pair of solvent outlet ports 15 communicate the interior cavity 11 with the exterior. Also here, the cited solvent inlet port 14 is designed to receive a connector 18 for connection to a conduit 96 (Fig 5) coming from a solvent supply source.

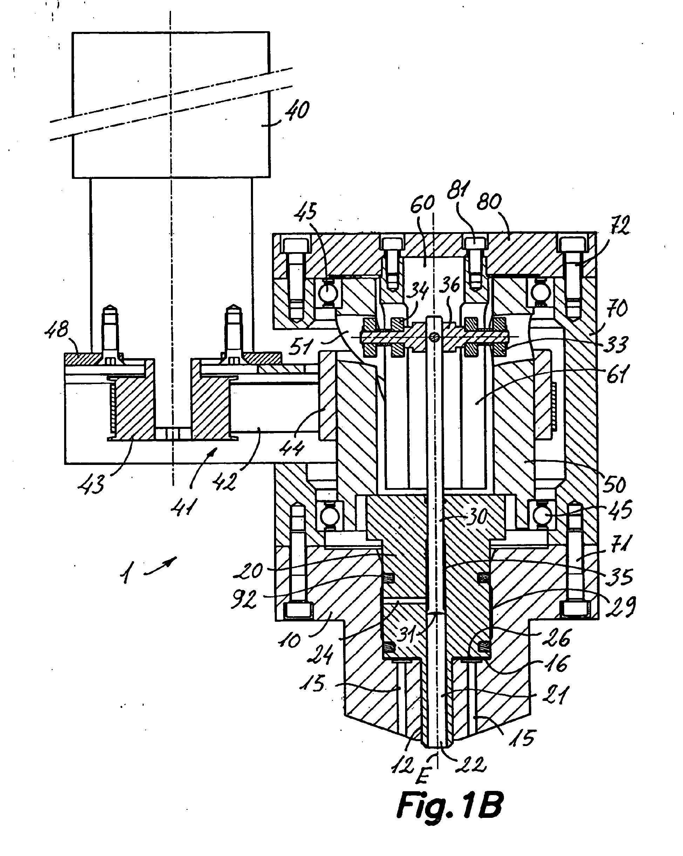

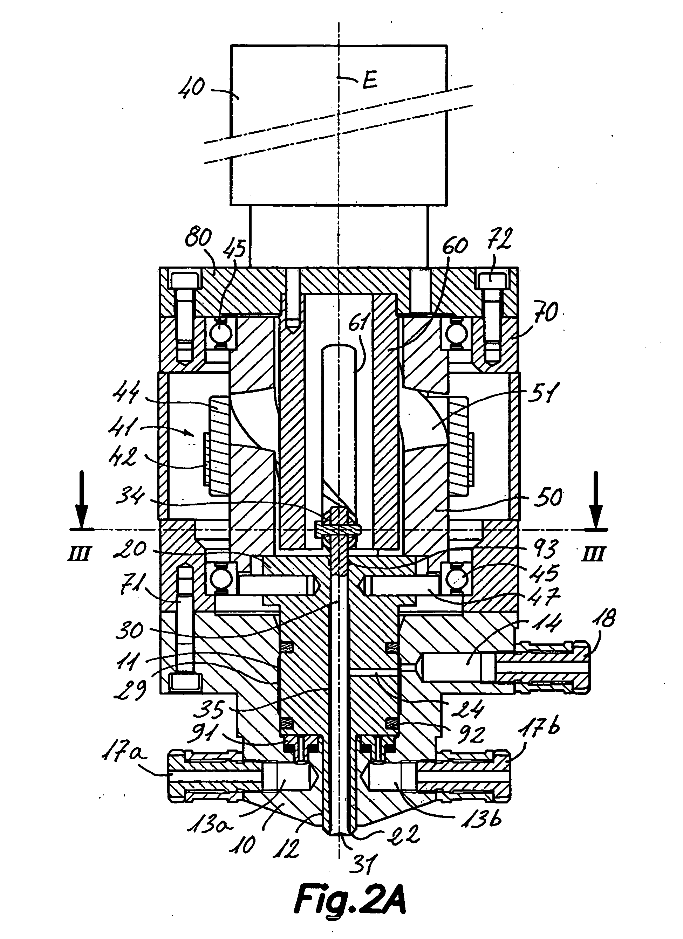

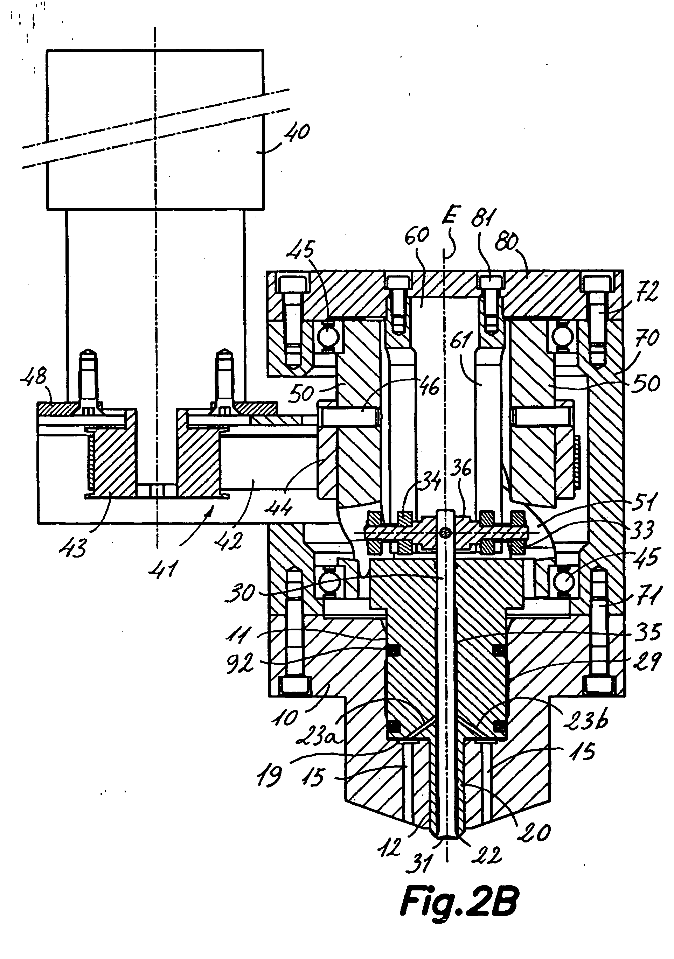

Inside the interior cavity 11 of the casing 10, there is a valve body 20, which defines some exterior surfaces and an interior mixing chamber 21 with a dispensing aperture 22 at one end. The cited valve body 20 incorporates a pair of components inlet ports 23a, 23b, together with at least one solvent inlet passage 24, which has mouths located on various surfaces of said exterior surfaces and which leads to the mentioned mixing chamber 21. The exterior valve body surfaces 20 as well as the interior casing 10 cavity 11 surfaces are shaped, in general, as rotating surfaces with respect to the longitudinal axis E of the head 1, where one of the exterior surfaces of the valve body 20, onto which the components inlet passages 23a, 23b open, is a substantially flat surface 26 (Fig 1B) perpendicular to the longitudinal axis E and facing a substantially flat surface 16 of the interior cavity 11 of the casing 10 onto which the components inlet ports 13a, 13b and the solvent outlet ports 15 open. In virtue of said rotating surfaces, the valve body is able to rotate within the cavity 11 of the casing 10, between an angular mixing and dispensing position (shown in Figs 1A and 1B), in which the components inlet passages 23a, 23b of the casing valve body 20 communicate with said components inlet ports 13a, 13b of casing 10 and an angular blocking position (shown in Figs 2A and 2B), in which the substantially flat surface 26 of the valve body 20 closes off the components inlet ports 13a, 13b of the casing 10. Some seals 91 guarantee leak-tightness between the components inlet ports 13a, 13b and the substantially flat surface 26 of the valve body 20 both in the angular mixing and dispensing position as well as the angular blocking position of the latter.

Obviously, the number of inlet and outlet ports, together with the number of passages, may vary depending on requirements and/or applications.

Some sealing rings 92 are housed inside some annular slots on an exterior surface of the valve body 20, which make contact with a corresponding interior surface of the casing 10. Between both sealing rings 92, the interior surface of the casing 10 presents a slightly recessed area that makes up an annular passage 29 that permanently communicates with the solvent inlet port 14. Therefore, the solvent inlet port 14 can be in any angular position with respect to the components inlet and outlet ports 13a, 13b, although in Figs 1A and 2A they are shown in the same plane for greater drawing simplicity.

Inside the mixing chamber 21 of the valve body 20, there is a spindle 30 that can be moved between a retracted position (shown in Figs. 1A and 1B) and an extended position (shown in Figs, 2A and 2B). The spindle 30 and the mixing chamber 21 are purposely shaped to define an annular chamber 35 between an exterior surface of the spindle 30 and an interior surface of the mixing chamber 21, which acts as a bridge that permits the flow of fluid from the mentioned solvent inlet passage 24 to the components inlet passages 23a, 23b when the spindle 30 is in the extended position. Thus, in the extended or cleaning position of the spindle 30, one end 31 of the spindle 30 limits the mentioned dispensing aperture 22 in the mixing chamber 21 at the same time that said solvent inlet passage 24 communicates with said solvent outlet ports 15 through the annular chamber 35 and the components inlet passages 23a, 23b, while in the retracted position, the spindle 30 does not interfere the flow of components from the components inlet passages 23a, 23b directly to the interior of the mixing chamber 21 and the end 31 of the spindle 30 forms a bottom for the mixing chamber 21, which facilitates the exit of the mixture towards the dispensing aperture 22. There is an annular slot on the valve body 20 containing a sealing ring 93, which makes a sealed contact against the exterior surface of the spindle 30.

Fig. 4 shows the detailed construction of the annular chamber 35. The cylindrical through hole located in the centre of the valve body 20 has an area of smaller diameter 27a and an area of larger diameter 27b. In general, the spindle 30 has an outside diameter that adjusts to the mentioned area of smaller diameter 27a and the end 31 of spindle 30 is wider, with an outside diameter that adjusts to said area of larger diameter 27b. The annular chamber 35 is limited by the exterior surface of the spindle, the interior surface of the area of greater diameter 27b, the internal part of the wide end 31 of the spindle and an annular transition wall between the areas of small and greater diameters 27a, 27b. The mixing chamber 21 comprises the area of greater diameter 27b, which is free when the spindle is in its retracted position and is limited at the bottom by the spindle end 31, the exterior section of which presents a concave depression, the purpose of which is described below. It must be pointed out, however, that the annular chamber 35 could be formed in several other different ways. For example, the through hole in the valve body could have a constant diameter and the spindle could have a section of smaller diameter to define the annular chamber.

The head of this invention incorporates some first driving means connected in order to alternately rotate the valve body 20 between the mentioned mixing and dispensing position and said blocking position, and some second driving means connected linearly and alternately translate the spindle 30 along the length of said longitudinal axis E between the mentioned retracted and extended positions. Moreover, the movements of the valve body 20 and the spindle 30 are linked together by means of some kinematic linkage in order to determine that the mixing and dispensing position of the valve body 20 unequivocally corresponds to the extended spindle 30 position and that the blocked position of valve body 20 unequivocally corresponds to the retracted spindle 30 position.

In the embodiment shown in the figures, the first driving means comprise an electric geared motor 40 coupled to rotate, by means of a transmission 41, the valve body 20 and said kinematic linkage means act as the second driving means in order to transmit the rotational movement of the valve body 20 to the spindle 30 and at the same time it converts it into translation movement.

The geared motor 40 is fixed to a support 48 that is a continuation of a chassis 70 to which the casing 10 is secured by means of screws 71. The mentioned transmission 41 consists of a toothed belt 42 coupled to a drive pulley 43 which is fixed to an output shaft on the electric geared motor 40 and to a driven pulley 44 fixed by means of gudgeon pins 46 (Fig. 2B) to a cylindrical sleeve 50, which is installed on said chassis 70 so that it is able to rotate with respect to the longitudinal axis E guided by some bearings 45. The valve body 20 is connected to said cylindrical sleeve 50 by gudgeon pins 47, so that the valve body 20 rotates together with the cylindrical sleeve 50. A cover 80, which is secured by screws 72 to the chassis 70, closes the end of head 1 opposite the casing 10.

The kinematic linkage means between valve body 20 movement and that of the spindle 30 consists of a pair of identical, diametrally opposite helicoidal cams 51, inside the cylindrical sleeve 50, and the corresponding cam followers 33 joined to the spindle 30 or, more specifically, to a shaft that is connected to the spindle. The mentioned cam followers 33 consist of wheels mounted on a shaft 36 that is transversally fixed to one end of the spindle 30 (better illustrated in Fig. 3), with said wheels arranged to roll over the respective helicoidal surfaces of the cams 51. Obviously, it is possible to install a single cam 51 and follower 33 assembly or more than two, with similar results.

The head 1 also includes some means to prevent the rotation of spindle 30 along the longitudinal axis E, which, however, do not prevent its axial movement, so that the spindle 30 is moved by the action of said helicoidal cam 51 on said cam follower 33 when said cylindrical sleeve 50 is rotated by the geared motor 40. These means to prevent the rotation of the spindle 30 consist of a pair of linear guides 61 formed in a stationary part 60 that secured by screws 81 to the mentioned cover 80, which has a fixed position with respect to the casing 10, and the corresponding guide followers 34 joined to the spindle 30 or to said shaft connected to the spindle and coupled to said linear guides 61. In the illustrated embodiment, the mentioned guide followers 34 comprise wheels mounted on the same shaft 36 (better illustrated in Fig. 3) and transversally fixed to one end of the spindle 30, on which the above described cam follower wheels 33 are mounted. The mentioned wheels 34 are arranged to roll on the respective flat surfaces of the liner guides 61. Obviously, it is possible to install a single linear guide 61 and follower 34 assembly or more than two, with similar results.

Some alternative means (not shown) to prevent the rotation of the spindle 30 could consist of, for example, at least a portion of the non-circular section of the spindle 30 inserted into a guide hole in the corresponding non-circular section on the casing 10. However, this alternative embodiment produces greater wear, so that the incorporation of rolling elements or skids to act as guide followers is preferred.

The operation of the head 1 is as follows. First, the geared motor 40 rotates the cylindrical sleeve 50 and the valve body 20, which is fixed to it, to the mixing and dispensing position as shown in Figs. 1A and 1B. At the same time, through the combined effect of the rotation of the helicoidal cams 51 and the stationary linear guides 61 over the respective cam 33 and guide 34 followers, the spindle 30 moves towards its retracted position, shown in Figs. 1A and 1B. As can be seen, in this position, which is the head 1 service position, the spindle 30 leaves the mixing chamber 21 free and its end 31 provides a bottom wall for the same, while the components inlet passages 23a, 23b of the valve body 20 directly communicate the casing components inlet ports 13a, 13b with the mixing chamber 21.

It can be seen that the components inlet passages 23a, 23b lead into the mixing chamber 21 in an oblique direction against the exit direction towards the dispensing aperture 22, thus favouring the flow of components into the mixing chamber 21 in a turbulent manner, which assists in the mixing of the components. In addition, the components inlet passages 23a, 23b lead to the mixing chamber 21 in an area close to the end 31 of the spindle 30 in a retracted position, which facilitates that the oblique flows of the components on entering interfere with the end 31 of the spindle 30 and rebound towards the dispensing aperture 22, additionally favouring the cited turbulent operation.

When an injection operation is completed, the geared motor 40 rotates the cylindrical sleeve 50 and the valve body 20 fixed to the same in an opposite direction to the blocked position as shown in Figs, 2A and 2B. At the same time, the spindle 30 is taken to its extended position that is similarly shown in Figs. 2A and 2B. In this position, which is the head 1 cleaning position, the substantially flat surface 26 of the valve body 20 closes the mouths of the components inlets ports 13a, 13b and the end 31 of the spindle 30 has ejected any remains of mixture in the mixing chamber 21 via its dispensing aperture 22. In addition to this, the annular chamber 35 formed between the spindle 30 and the mixing chamber 21 wall establishes a bridge that puts the solvent inlet passage 24 in fluid communication with the components inlet passages 23a, 23b, which permits the cleaning of the mixing chamber wall and the components inlet passages 23a, 23b

It will be noted that the solvent inlet port 14 is in constant communication with the cited annular passage 29 and this, in turn, is in constant communication with the annular chamber 35 via the solvent inlet passage 24 of the valve body 20. However, the annular chamber 35 only communicates with the components inlet passages 23a, 23b when the spindle 30 is in its extended position (head cleaning position shown in Figs. 2A and 2B), and the components inlet passages 23a, 23b are only in communication with the solvent outlet port 15 when the valve body is in its blocked position (head cleaning position shown in Figs. 2A and 2B). Thus, in this cleaning position, the components inlet passages 23a, 23b act as solvent outlet passages together with the component remains, which are finally evacuated via the solvent outlet ports 15. The cited concave depression at the end 31 of the spindle 30 operates in the dispensing aperture 22 to force the dripping of the dirty solvent that could slide over the exterior surface of the end of casing 1.

Although the components inlet passages 23a, 23b can be positioned directly facing the solvent outlet ports 15, there are other ways to communicate them. In this way, as shown in Fig. 2B, there can be some channels 19 on the substantially flat surface 16 of the interior cavity 11 of the casing 10 in order to communicate the components inlet passages 23a, 23b with the solvent outlet ports 15, although they are not directly facing. Alternatively, in substitution of the mentioned solvent outlet ports 15, or in addition to them, a solvent outlet port may be constructed in the form of an annular chamber (not shown), consisting of a gap between the valve body 20 and the casing 10 in an area between the substantially flat surface 26 and the end where the dispensing aperture 22 is located , with said annular chamber communicating with a space between the substantially flat surfaces 16, 26 of the casing 10 and the valve body 20 respectively.

Although in the head, according to the embodiment of the invention illustrated and described up to now, the drive for the valve body 20 and spindle 30 movements is performed by a geared motor 40, the rotation of the valve body 20, together with transmitting and converting the rotation of the valve body 20 in the translation of the spindle 30 by means of the helicoidal cams 51, it is obvious to an expert in the material that the head drive may be obtained using a single motor organ in an inverse manner.

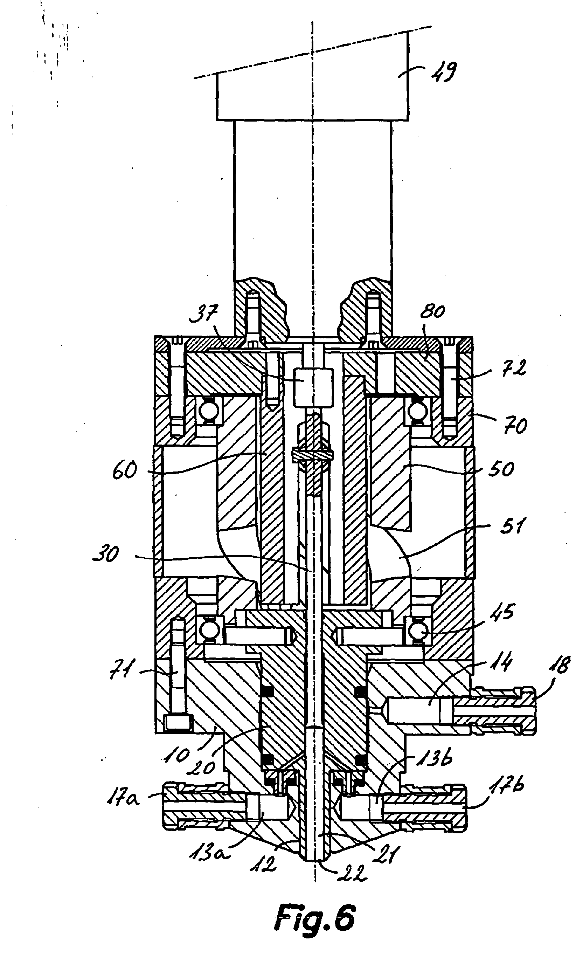

Thus, according to another alternative embodiment shown in Fig. 6, the second driving means are coupled in order to linearly move the spindle 30 and said kinematic linkage means act as the first driving means in order to transmit the spindle 30 translation movement and convert it into rotational movement of the valve body 20. In other words, the second driving means comprise a linear drive 49, such as an electric geared motor coupled to a nut and arbour mechanism, or a fluidodynamic piston and cylinder assembly, with an active member linked by means of a coupling 37 to the spindle 30 in order to translate it linearly, while the kinematic linkage means include one or more cam followers 33, connected to the spindle 30 and coupled to some corresponding helicoidal cams 51 formed in a part that is connected to pull the valve body 20. Some means are also included here, which could be similar to those described above, to prevent rotation of the spindle 30 when it is moved by the geared motor and while the valve body 20 is rotated by the action of the cam followers on the helicoidal cams. Otherwise, the head shown in Fig. 6 is similar to that previously described in relation to Figs. 1A-4.

Now referring to Fig. 5, this shows a mixer and dispensing unit 2 designed to operate together with a bag handling unit 3 in order to automatically fill said bags with a mixture of the two components. The mentioned mixing and injection unit 2 incorporates the mixing-dispensing head 1 according to this invention. A heater 7a is installed on one side of the head 1 and connected to a one-component supply source (not shown) via a conduit 94a and some means of flow impulsion for said component. Another heater 7b is installed on the other side of the head 1 and connected to another one-component supply source (not shown) via a corresponding conduit 94b and some means of flow impulsion for said component. Each of the components inlet ports 13a, 13b for head 1 is connected to the outlet of one of said heaters 7a, 7b via a corresponding conduit 95a, 95b. The solvent inlet port 14 for head 1 is connected to a conduit 96 coming from a solvent supply source (not shown).

In a typical application, one of the components is polyol in a liquid state, and the other is isocyanate, also in a liquid state, and from the mixture of said polyol and said isocyanate in the head mixing chamber 21, a polyurethane PUR foam is produced, which is dispensed through the dispensing aperture 22 in head 1.

Each of said heaters 7a, 7b is fitted with heating means to heat the corresponding components just before it enters the mixing chamber 21 of the valve body 20 through the respective components inlet ports 13a, 13b and components inlet passages 23a, 23b. This replaces the heating hoses that are usually employed in state of the art injection devices to connect the components supply sources to the head, and also to permit a compact design of the mixing and injection unit 2 in conjunction with a relatively reduced head size.

The bag handling unit 3 includes some means to grip and support a plastic bag 98, for example, by means of automatic clips 97, with an open mouth of the same under the dispensing aperture 22 of head 1 to facilitate bag filling. Several bag handling devices are known in the state of the art that could be employed with the mixing and injection unit 2 of this invention.

Preferably, the mixing and injection unit 2, together with said bag handling unit 3 form a compact design assembly, which is easily portable, and suitable for table or counter operation. However, the mixing and injection unit 2 can operate in a stand-alone manner or together with the bag handling unit 3, in cooperation with a bag production unit (not shown), of which there are various examples in the state of the art. In a typical application, the bags 98 are made from high-density polyethylene film PE-HD.

An expert in the material would be able to introduce various modifications to the described and illustrated embodiment without leaving the scope of this invention, which is described in the attached claims.

## Claims

1. Mixing-dispensing head, of the type comprising:
a casing (10) that defines an interior cavity (11) with an open end (12), and with components inlet ports (13a, 13b), at least one solvent inlet port (14) and at least one solvent outlet port (15), with said components inlet and solvent inlet and outlet ports (13a, 13b, 14, 15) communicating with said interior cavity (11);
a valve body (20) housed inside the interior cavity (11) of said casing (10), said valve body (20) defining exterior surfaces and an interior mixing chamber (21), with a dispensing aperture (22), and components inlet passages (23a, 23b), and at least one solvent inlet passage (24), where said components and solvent inlet passages (23a, 23b, 24) extend between openings in said exterior surfaces and said mixing chamber (21);
a spindle (30) housed inside the mixing chamber (21) of the valve body (20), being defined an annular chamber (35) between an exterior surface of said spindle (30) and an interior surface of the mixing chamber (21) that permit the passage of fluid;
first driving means connected to alternately move said valve body (20) between a mixing and dispensing position, in which said components inlet passages (23a, 23b) communicate with said components inlet ports (13a, 13b), and a blocking position, in which at least one of the exterior valve body (20) surfaces shuts off the components inlet ports (13a, 13b); and
second driving means connected to linearly and alternately move the spindle (30) along a longitudinal axis (E) between an extended position, in which one end (31) of the spindle (30) limits said dispensing aperture (22) of the mixing chamber (21) and said solvent inlet passage (24) communicates with said solvent outlet ports (15) through said annular chamber (35), and a retracted position, in which the spindle (30) does not interfere with the flow of components from the components inlet passages (23a, 23b) to the mixing chamber (21) and said end (31) of the spindle (30) forms a bottom for the mixing chamber (21), which facilitates the exit of the mixture towards the dispensing aperture (22),
**characterised in that** the valve body (20) is mounted in a rotating fashion inside the interior cavity (11) of the casing (10) to be alternately moved between said mixing and dispensing position and said blocking position by rotating around a longitudinal axis (E), being incorporated kinematic linkage means between the valve body (20) and the spindle (30) in order to determine that to the valve body (20) mixing and dispensing position corresponds the retracted spindle (30) position and that to the valve body (20) blocking position corresponds the extended spindle (30) position.

2. A head according to claim 1, **characterised in that** said kinematic linkage means comprises at least one helicoidal cam (51).

3. A head according to claim 1, **characterised in that** the first driving means are coupled in order to rotate the valve body (20) and said kinematic linkage means act as the second driving means in order to transmit the rotating valve body (20) movement and convert it into spindle (30) translation movement.

4. A head according to claim 3, **characterised in that** the first driving means comprises an electric gear reducer motor (40), geared to rotate, via a transmission (41), a cylindrical sleeve (50) that is installed in said casing (10) in a guided manner in order to rotate with respect to the longitudinal axis (E), with said cylindrical sleeve (50) being fixed to the valve body (20) and being formed at least one helicoidal cam (51) in the cylindrical sleeve (50), to which a corresponding cam follower (33) joined to the spindle (30) is coupled.

5. A head, according to claim 1, **characterised in that** the second driving means are coupled in order to linearly move the spindle (30) and said kinematic linkage means act as the first driving means in order to transmit the spindle (30) translation movement and convert it into the valve body (20) rotational movement.

6. A head, according to claim 5, **characterised in that** the second driving means comprise a linear actuator (49) coupled so that it linearly translates the spindle (30), with at least one cam follower (33) joined to the spindle (30) and coupled to a corresponding helicoidal cam (51) formed in a part joined to the valve body (20).

7. A head, according to any of the preceding claims, **characterised in that** it comprises means to prevent spindle (30) rotation around the longitudinal axis (E) while allowing spindle movement in the direction of the longitudinal axis (E).

8. A head, according to claim 7, **characterised in that** said means to prevent spindle (30) rotation comprise at least one linear guide (61) formed in a stationary part (60) fixed to the casing (10), being coupled to said linear guide (61) a corresponding guide follower (34) joined to the spindle (30).

9. A head, according to claim 7, **characterised in that** said means to prevent spindle (30) rotation comprise at least one portion of non-circular section of the spindle (30) inserted into a non-circular section guide hole formed in a part fixed to the casing (10).

10. A head, according to any of the preceding claims, **characterised in that** the components inlet passages (23a, 23b) lead into the mixing chamber (21) in an oblique direction opposite to the exit direction towards the dispensing aperture (22), thus favouring the flow of the components into the mixing chamber (21) in a turbulent state, which assists in the mixing of the same.

11. A head, according to claim 10, **characterised in that** the components inlet passages (23a, 23b) lead into the mixing chamber (21) in a zone close to the end (31) of the spindle (30), when the same forms a bottom of the mixing chamber (21) in the retracted position, so that the oblique component inlet flows interfere with the end (31) of the spindle (30) and rebound towards the dispensing aperture (22), favouring said turbulent state.

12. A head, according to claim 11, **characterised in that** exterior surfaces of the valve body (20) and interior surfaces of the interior cavity (11) of the casing (10) are, in general, produced as revolution surfaces with respect to said longitudinal axis (E), and one of the exterior surfaces of the valve body (20) onto which the components inlet passages (23a, 23b) open is a substantially flat surface (26) that is perpendicular to the longitudinal axis (E) and is faced to a substantially flat surface (16) of the interior cavity (11) of the casing (10), onto which the components inlet ports (13a, 13b) and the solvent outlet ports (15) open.

13. A head, according to any of the previous claims, **characterised in that** each components inlet port (13a, 13b) of the casing (10) is coupled to a corresponding heater (7a, 7b) provided with heating means to heat the corresponding component just before it is introduced into the interior of the mixing chamber (21) via the respective components inlet ports (13a, 13b) and components inlet passages (23a, 23b).

14. A head, according to claim 13, **characterised in that** each of the heaters (7a, 7b) is connected to a corresponding one-component supply source through some respective conduits (94a, 94b).

15. A head, according to claim 14, **characterised in that,** together with said heaters (7a, 7b), it forms a mixing and injection unit (2) designed to operate in coperation with a bag handling unit (3) to automatically fill plastic bags (98) with a mixture of the components.

16. A head, according to claim 15, **characterised in that** said mixing and injection unit (2), together with said bag handling unit (3) are designed to operate in cooperation with a bag production unit.

17. A head, according to claim 15, **characterised in that** said mixing and injection unit (2), together with said bag handling unit (3) are of a compact, easily portable design that is suitable for operation on a table or counter.

18. A head, according to any of the previous claims 13 to 17, **characterised in that** a first heater (7a) is connected to a liquid polyol supply source, and a second heater (7b) is connected to a liquid isocyanate supply source, forming a polyurethane PUR foam from the mixture of said polyol and said isocyanate in the mixing chamber (21).

## Patentansprüche

1. Misch-Spendekopf mit:
einem Gehäuse (10), durch das ein Innenhohlraum (11) mit offenem Ende (12) und mit Einlassöffnungen für Bestandteile (13a, 13b), mindestens einer Einlassöffnung für Lösungsmittel (14) sowie mindestens einer Auslassöffnung für Lösungsmittel (15) definiert sind, wobei die Einlassöffnungen für Bestandteile und Einlass- und Auslassöffnungen für Lösungsmittel (13a, 13b, 14, 15) mit dem Innenhohlraum (11) kommunizieren;
einem Ventilkörper (20), der im Innenhohlraum (11) des Gehäuses (10) untergebracht ist, wobei durch den Ventilkörper (20) Außenflächen und eine Innenmischkammer (21) mit einer Spendeöffnung (22) und Einlassdurchgänge für die Bestandteile (23a, 23b) und mindestens ein Einlassdurchgang für Lösungsmittel (24) definiert sind, wobei sich die Einlassdurchgänge für Bestandteile und Lösungsmittel (23a, 23b, 24) zwischen den Öffnungen in den Außenflächen und der Mischkammer (21) erstrecken;
einer Spindel (30), die im Innern der Mischkammer (21) des Ventilkörpers (20) untergebracht ist, wobei zwischen einer Außenfläche der Spindel (30) und einer Innenfläche der Mischkammer (21) eine ringförmige Kammer (35) definiert ist, durch die die Flüssigkeit passieren kann;
ersten Antriebsmitteln, die so verbunden sind, dass sie den Ventilkörper (20) abwechselnd zwischen einer Misch- und Spendestellung, bei der die Einlassdurchgänge für Bestandteile (23a, 23b) mit den Einlassöffnungen für Bestandteile (13a, 13b) kommunizieren, und einer Sperrstellung verschieben, bei der mindestens eine der Außenflächen des Ventilkörpers (20) die Einlassöffnungen für Bestandteile (13a, 13b) sperren; sowie
zweiten Antriebsmitteln, die so verbunden sind, dass sie die Spindel (30) linear und abwechselnd entlang einer Längsachse (E) zwischen einer ausgefahrenen Stellung, bei der ein Ende (31) der Spindel (30) die Spendeöffnung (22) der Mischkammer (21) begrenzt und der Einlassdurchgang für Lösungsmittel (24) über die ringförmige Kammer (35) mit den Auslassöffnungen für Lösungsmittel (15) kommuniziert, und einer eingefahrenen Stellung verschiebt, bei der die Spindel (30) nicht den Fluss der Bestandteile von den Einlassdurchgängen für Bestandteile (23a, 23b) zur Mischkammer (21) behindert und das Ende (31) der Spindel (30) einen Boden für die Mischkammer (21) bildet, wodurch das Abfließen der Mischung in Richtung der Spendeöffnung (22) erleichtert wird,
**dadurch gekennzeichnet, dass** der Ventilkörper (20) im Innern des Innenhohlraums (11) des Gehäuses (10) drehbar gelagert ist, so dass er abwechselnd zwischen der Misch- und Spendestellung und der Sperrstellung durch Drehen um eine Längsachse (E) verschiebbar ist, wobei zwischen dem Ventilkörper (20) und der Spindel (30) kinematische Verbindungsmittel eingebaut sind, mit deren Hilfe bestimmt werden kann, dass der Misch- und Spendestellung des Ventilkörpers (20) die eingefahrene Stellung der Spindel (30) und der Sperrstellung des Ventilkörpers (20) die ausgefahrene Stellung der Spindel (30) entspricht.

2. Kopf nach Anspruch 1, **dadurch gekennzeichnet, dass** die kinematischen Verbindungsmittel mindestens eine Spiralnocke (51) aufweisen.

3. Kopf nach Anspruch 1, **dadurch gekennzeichnet, dass** die ersten Antriebsmittel zur Drehung des Ventilkörpers (20) gekoppelt sind und die kinematischen Verbindungsmittel zur Übertragung der Bewegung des drehenden Ventilkörpers (20) und Umwandlung in eine Translationsbewegung der Spindel (30) als die zweiten Antriebsmittel fungieren.

4. Kopf nach Anspruch 3, **dadurch gekennzeichnet, dass** die ersten Antriebsmittel einen Untersetzungsgetriebeelektromotor (40) aufweisen, der über ein Getriebe (41) eine Zylinderbuchse (50) dreht, die im Gehäuse (10) führend angeordnet ist, so dass sie zur Längsachse (E) drehbar ist, wobei die Zylinderbuchse (50) am Ventilkörper (20) befestigt ist und in der Zylinderbuchse (50) mindestens eine Spiralnocke (51) ausgebildet ist, an die ein mit der Spindel (30) verbundener entsprechender Nockenstößel (33) gekoppelt ist.

5. Kopf nach Anspruch 1, **dadurch gekennzeichnet, dass** die zweiten Antriebsmittel zur linearen Verschiebung der Spindel (30) gekoppelt sind und die kinematischen Verbindungsmittel zur Übertragung der Translationsbewegung der Spindel (30) und deren Umwandlung in die Drehbewegung des Ventilkörpers (20) als die ersten Antriebsmittel fungieren.

6. Kopf nach Anspruch 5, **dadurch gekennzeichnet, dass** die zweiten Antriebsmittel einen linearen gekoppelten Stellantrieb (49) zur linearen Translationsbewegung der Spindel (30) aufweisen, wobei mindestens ein Nockenstößel (33) mit der Spindel (30) verbunden und an eine entsprechende Spiralnocke (51) gekoppelt ist, die in einem mit dem Ventilkörper (20) verbundenen Teil ausgebildet ist.

7. Kopf nach einem der vorhergehenden Ansprüche, **dadurch gekennzeichnet, dass** er Mittel zur Verhinderung der Drehung der Spindel (30) um die Längsachse (E) aufweist, während die Bewegung der Spindel (30) in Richtung der Längsachse (E) ermöglicht wird.

8. Kopf nach Anspruch 7, **dadurch gekennzeichnet, dass** die Mittel zur Verhinderung der Drehung der Spindel (30) mindestens eine Linearführung (61) aufweisen, die in einem am Gehäuse (10) befestigten feststehenden Teil (60) ausgebildet ist, wobei an die Linearführung (61) ein entsprechendes, mit der Spindel (30) verbundenes Führungsritzel (34) gekoppelt ist.

9. Kopf nach Anspruch 7, **dadurch gekennzeichnet, dass** die Mittel zur Verhinderung der Drehung der Spindel (30) mindestens einen Teil eines nichtrunden Abschnitts der Spindel (30) aufweisen, der in eine Führungsbohrung eines nichtrunden Abschnitts eingesetzt ist, die in einem am Gehäuse (10) befestigten Teil ausgebildet ist.

10. Kopf nach einem der vorhergehenden Ansprüche, **dadurch gekennzeichnet, dass** die Einlassdurchgänge für Bestandteile (23a, 23b) in einer der Abfließrichtung in Richtung der Spendeöffnung (22) gegenüber liegenden schrägen Richtung in die Mischkammer (21) führen, so dass der Fluss der Bestandteile in die Mischkammer (21) in turbulentem Zustand begünstigt wird, wodurch deren Vermischen unterstützt wird.

11. Kopf nach Anspruch 10, **dadurch gekennzeichnet, dass** die Einlassdurchgänge für Bestandteile (23a, 23b) in einem dem Ende (31) der Spindel (30) nahen Bereich, wenn diese bei eingefahrener Stellung einen Boden der Mischkammer (21) bildet, in die Mischkammer (21) führen, so dass der Fluss der Bestandteile in schräger Richtung das Ende (31) der Spindel (30) behindert und in Richtung der Spendeöffnung (22) zurückprallt, wodurch der turbulente Zustand begünstigt wird.

12. Kopf nach Anspruch 11, **dadurch gekennzeichnet, dass** die Außenflächen des Ventilkörpers (20) und die Innenflächen des Innenhohlraums (11) des Gehäuses (10) in der Regel als Drehflächen bezüglich der Längsachse (E) ausgeführt sind und eine der Außenflächen des Ventilkörpers (20), in deren Richtung die Einlassdurchgänge für Bestandteile (23a, 23b) geöffnet sind, eine im wesentlichen ebene Fläche (26) darstellt, die senkrecht zur Längsachse (E) verläuft und gegenüber einer im wesentlichen ebenen Fläche (16) des Innenhohlraums (11) des Gehäuses (10) liegt, in deren Richtung die Einlassöffnungen für Lösungsmittel (13a, 13b) und die Auslassöffnungen für Lösungsmittel (15) geöffnet sind.

13. Kopf nach einem der vorhergehenden Ansprüche, **dadurch gekennzeichnet, dass** die Einlassöffnungen für Bestandteile (13a, 13b) des Gehäuses (10) jeweils an eine entsprechende Heizvorrichtung (7a, 7b) gekoppelt sind, die mit Heizmitteln zum Erhitzen des entsprechenden Bestandteils kurz vor dessen Eintreten in die Mischkammer (21) über die jeweiligen Einlassöffnungen für Bestandteile (13a, 13b) und Einlassdurchgänge für Bestandteile (23a, 23b) versehen ist.

14. Kopf nach Anspruch 13, **dadurch gekennzeichnet, dass** die Heizvorrichtungen (7a, 7b) jeweils über entsprechende Rohrleitungen (94a, 94b) mit einer entsprechenden Einkomponenten-Zufuhrquelle verbunden sind.

15. Kopf nach Anspruch 14, **dadurch gekennzeichnet, dass** er zusammen mit den Heizvorrichtungen (7a, 7b) eine Misch- und Einspritzeinheit (2) bildet, die dazu dient, zum automatischen Befüllen von Plastiktaschen (98) mit einer Mischung der Bestandteile mit einer Taschenhandhabungseinheit (3) zusammen zu arbeiten.

16. Kopf nach Anspruch 15, **dadurch gekennzeichnet, dass** die Misch- und Einspritzeinheit (2) zusammen mit der Taschenhandhabungseinheit (3) dazu dient, mit einer Taschenherstellungseinheit zusammen zu arbeiten.

17. Kopf nach Anspruch 15, **dadurch gekennzeichnet, dass** die Misch- und Einspritzeinheit (2) zusammen mit der Taschenhandhabungseinheit (3) kompakt und leicht zu tragen ausgeführt ist, so dass sie auf einem Tisch oder einer Theke bedient werden kann.

18. Kopf nach einem der vorhergehenden Ansprüche 13 bis 17, **dadurch gekennzeichnet, dass** eine erste Heizvorrichtung (7a) mit einer Zufuhrquelle für flüssiges Polyol und eine zweite Heizvorrichtung (7b) mit einer Zufuhrquelle für flüssiges Isocyanat verbunden ist, wodurch aus der Mischung aus Polyol und Isocyanat in der Mischkammer (21) ein Polyurethanschaumstoff PUR entsteht.

## Revendications

1. Tête malaxeuse et dispensatrice du genre comportant:
un boîtier (10) définissant une cavité intérieure (11) ayant une extrémité ouverte (12) et des ouvertures d'entrée pour composants (13a, 13b), au moins une ouverture d'entrée pour un solvant (14) et au moins une ouverture de sortie pour un solvant (15), ces ouvertures d'entrée de composants et d'entrée et sortie de solvant (13a, 13b, 14, 15) communiquant avec cette cavité intérieure (11);
un corps de vanne (20) logé à l'intérieur de la cavité intérieure (11) de ce boîtier (10), ce corps de vanne (20) définissant des surfaces extérieures et une chambre malaxeuse intérieure (21) avec une ouverture dispensatrice (22) et des passages d'entrée de composants (23a, 23b) et au moins un passage d'entrée de solvant (24), où ces passages d'entrée de composants et de solvant (23a, 23b, 24) s'étendent entre les ouvertures sur ces surfaces extérieures et cette chambre malaxeuse (21);
une tige (30) logées à l'intérieur de la chambre malaxeuse (21) du corps de vanne (20), une chambre annulaire (35) étant définie entre une surface extérieure de cette tige (30) et une surface intérieure de la chambre malaxeuse (21) qui permet le passage du fluide;
des premiers moyens d'entraînement reliés pour déplacer alternativement ce corps de vanne (20) entre une position pour malaxer et pour dispenser, dans lesquels ces passages d'entrée de composants (23a, 23b) communiquent avec ces ouvertures d'entrée de composants (13a, 13b) et une position de blocage, dans laquelle au moins une des surfaces extérieures du corps de vanne (20) ferme les ouvertures d'entrée des composants (13a, 13b); et
des deuxièmes moyens d'entraînement reliés pour déplacer de façon linéaire et alternée la tige (30) le long d'un axe longitudinal (E) entre une position étendue dans laquelle une extrémité (31) de la tige (30) limite cette ouverture dispensatrice (22) de la chambre malaxeuse (21) et ce passage d'entrée du solvant (24) communique avec cette ouverture de sortie du solvant (15) à travers cette chambre annulaire (35) et une position rétractée dans laquelle la tige (30) ne gêne pas le débit de composants des passages d'entrée de composants (23a, 23b) à la chambre malaxeuse (21) et cette extrémité (31) de la tige (30) forme un fonds pour la chambre malaxeuse (21), qui facilite la sortie du mélange vers l'ouverture dispensatrice (22).
**caractérisé en ce que** le corps de vanne (20) est monté tournant à l'intérieur de la cavité intérieure (11) du boîtier (10) pour être alternativement déplacé entre cette position pour malaxer et pour dispenser et cette position de verrouillage en tournant autour d'un axe longitudinal (E), des moyens de liaison cinématiques étant incorporés entre le corps de vanne (20) et la tige (30) afin de déterminer que la position pour malaxer et dispenser du corps de vanne (20) correspond à la position de tige rétractée (30) et que la position de verrouillage du corps de vanne (20) correspond à la position de la tige (30) étendue.

2. Une tête conformément à la revendication 1, **caractérisée en ce que** ces moyens cinématiques comportent au moins une came hélicoïdale (51).

3. Une tête conformément à la revendication 1, **caractérisée en ce que** les premiers moyens d'entraînement sont accouplés afin de faire tourner le corps de vanne (20) et ces moyens de liaison cinématiques font l'office de deuxièmes moyens d'entraînement afin de transmettre le mouvement tournant du corps de vanne (20) et le convertir en un mouvement de translation de la tige (30).

4. Une tête conformément à la revendication 3 **caractérisée en ce que** les premiers moyens d'entraînement comportent un moteur à engrenage électroréducteur (40) engrené pour faire tourner, par le biais de la transmission (41), un manchon cylindrique (50) qui est installé dans ce boîtier (10) guidé afin de tourner par rapport à l'axe longitudinal (E) ce manchon cylindrique (50) étant fixé au corps de vanne (20) et au moins une came hélicoïdale (51) étant formée sur le manchon cylindrique (50) auquel une contre-came (33) correspondante unie à la tige (30) est accouplée.

5. Une tête, conformément à la revendication 1, **caractérisée en ce que** les deuxième moyens d'entraînement sont accouplés afin de déplacer linéairement la tige (30) et ces moyens de liaison cinématique font l'office de premiers moyens d'entraînement afin de transmettre le mouvement de translation de la tige (30) et le convertir en le mouvement tournant du corps de vanne (20).

6. Une tête, conformément à la revendication 5, **caractérisée en ce que** les deuxièmes moyens d'entraînement comportent un actionneur linéaire (49) accouplé de sorte à déplacer linéairement la tige (30) avec au moins une contre-came (33) unie à la tige (30) et accouplée à une came hélicoïdale correspondante (51) formée sur une partie unie au corps de vanne (20).

7. Une tête, conformément à une quelconque des revendications précédentes, **caractérisée en ce qu'**elle comporte des moyens pour empêcher la rotation de la tige (30) autour de l'axe longitudinal (E) tout en permettant le mouvement de la tige dans la direction de l'axe longitudinal (E).

8. Une tête, conformément à la revendication 7, **caractérisée en ce que** ces moyens pour empêcher la rotation de la tige (30) comporte au moins une glissière linéaire (61) formée par une partie fixe (60) fixée au boîtier (10), une contre-glissière correspondante (34) étant accouplée à cette glissière linéaire (61), unie à la tige (30).

9. Une tête conformément à la revendication 7, **caractérisée en ce que** ces moyens pour empêcher la rotation de la tige (30) comporte au moins une portion de section non circulaire de la tige (30) insérée dans un trou de glissière à section non circulaire formé dans une partie fixée au boîtier (10).

10. Une tête, conformément à une quelconque des revendications précédentes, **caractérisées en ce que** les passages d'entrée de composants (23a, 23b) conduisent à l'intérieur de la chambre malaxeuse (21) en direction oblique opposée à la direction de sortie vers l'ouverture dispensatrice (22) en favorisant ainsi le débit des composants dans la chambre malaxeuse (21) en état turbulent, qui aide à leur malaxage.

11. Une tête, conformément à la revendication 10, **caractérisée en ce que** les passages d'entrée des composants (23a, 23b) conduisent à l'intérieur de la chambre de malaxage (21) dans une région à proximité de l'extrémité (31) de la tige (30) lorsque celle-ci forme un fond de la chambre de malaxage (21) en position rétractée, de sorte que les débits de sortie de composants oblique sont gênés à l'extrémité (31) de la tige (30) et rebondissent vers l'ouverture dispensatrice (22) en favorisant cet état turbulent.

12. Une tête, conformément à la revendication 11, **caractérisée en ce que** les surfaces extérieures du corps de vanne (20) et les surfaces intérieures de la cavité intérieure (11) du boîtier (10) sont, en général, produites comme des surfaces de révolution par rapport à cet axe longitudinal (E) et une des surfaces extérieures du corps de vanne (20) dans lequel les passages d'entrée de composants (23a, 23b) ouverts est une surface sensiblement plate (26) qui est perpendiculaire à l'axe longitudinal (E) et est en regard d'une surface sensiblement plate (16) de la cavité intérieure (11) du boîtier (10) dans lequel sont ouverts les trous d'entrée des composants (13a, 13b) et les trous de sortie du solvant (15).

13. Une tête, conformément à une quelconque des revendications précédentes, **caractérisées en ce que** chaque trou d'entrée des composants (13a, 13b) du boîtier (10) est accouplé à l'appareil de chauffage correspondant (7a, 7b) pourvu de moyens de chauffage pour chauffer le composant correspondant juste avant son introduction à l'intérieure de la chambre malaxeuse (21) à travers les trous d'entrée des composants respectifs (13a, 13b) et les passages d'entrée des composants (23a, 23b).

14. Une tête, conformément à la revendication 13, **caractérisée en ce que** chacun des appareils de chauffage (7a, 7b) est relié à une source d'approvisionnement d'un composant à travers les conduites respectives (94a, 94b).

15. Une tête conformément à la revendication 14, **caractérisée en ce que**, avec ces appareils de chauffage (7a, 7b), elle forme une unité de malaxage et d'injection (2) destinée à fonctionner en coopération avec une unité de manipulation de sacs (3) pour remplir automatiquement des sacs en plastique (98) d'un mélange de composants.

16. Une tête, conformément à la revendication 15, **caractérisée en ce que** cette unité de malaxage et d'injection (2) ensemble avec cette unité de manipulation de sacs (3) sont destinés à fonctionner en coopération avec une unité de production de sacs.

17. Une tête, conformément à la revendication 15, **caractérisée en ce que** cette unité de malaxage et d'injection (2) ensemble avec cette unité de manipulation de sacs (3) ont un dessin compact, facilement portable qui est approprié pour fonctionner sur une table ou comptoir.

18. Une tête, conformément à une quelconque des revendications précédentes 13 à 17, **caractérisée en ce qu'**un premier appareil de chauffage (7a) est relié à une source d'approvisionnement de polyol liquide et un deuxième appareil de chauffage (7b) est relié à une source d'approvisionnement d'isocyanate liquide, en formant une mousse de PUR polyuréthane à partir du mélange de ce polyol et de cet isocyanate dans la chambre de malaxage (21).
